# EUROPÄISCHE PATENTSCHRIFT

(11) **EP 0 839 679 B1**
(45) Veröffentlichungstag und Bekanntmachung des Hinweises auf die Patenterteilung: **26.01.2005**
(21) Anmeldenummer: 97118403.1
(22) Anmeldetag: 23.10.1997
(51) Int. Cl.: B60H 1/00, B60H 1/32

(54) **Vorrichtung zur Kühlung eines Fahrzeuginnenraumes**
An apparatus for cooling a motor vehicle interior.
Dispositif pour le refroidissement de l'habitacle d'un véhicule automobile.

(30) Priorität: 02.11.1996 DE 19645178
(43) Veröffentlichungstag der Anmeldung: 06.05.1998
(73) Patentinhaber: WEBASTO THERMOSYSTEME GmbH, D-82131 Stockdorf (DE)
(72) Erfinder: Krompass, Andreas, 80805 München (DE); Hammerschmid, Günther, 82065 Baierbrunn (DE); Mayer, Helmut, 82205 Gilching (DE); Forsthuber, Wolfgang, Dr., 82216 Maisach (DE)
(74) Vertreter: Wiese, Gerhard

(56) Entgegenhaltungen:
- DE-A- 1 430 787
- DE-A- 2 115 948
- GB-A- 989 836
- US-A- 2 013 848
- US-A- 2 202 635
- US-A- 2 957 317

## Beschreibung

Die Erfindung betrifft eine Vorrichtung zur Kühlung eines Fahrzeuginnenraumes mit einem ersten Kältemittelkreislauf, der einen Kompressor, einen Verflüssiger, und wenigstens einen Verdampfer umfaßt und einem zweiten Kältemittelkreislauf, der wenigstens einen weiteren Verdampfer umfaßt, der mit einem Eisspeicher zu einer Baueinheit verbunden ist und mittels wenigstens eines Ventils parallel zum ersten Verdampfer schaltbar ist gemäß dem Oberbegriff des Patentanspruchs 1.

Eine derartige Vorrichtung ist aus der DE 21 15 948 A bekannt. Bei dieser ist eine Baueinheit aus einem weiteren Verdampfer und einem Eisspeicher im Bereich des Fahrzeugdaches eines Personenkraftwagens angeordnet. Zur Kühlung des Fahrzeuginnenraums bei Stillstand des Kompressors wird Luft mittels eines Gebläses an der Unterseite des Eisspeichers entlang nach hinten geführt, dort von einer Heizung über den Taupunkt erwärmt, umgelenkt und beim Rückströmen nach vorne durch einen porösen Innenhimmel in den Fahrzeuginnenraums geleitet. Die von der Luft aufgenommene Kälteleistung ist begrenzt und wird zusätzlich durch die Erwärmung mittels der Heizung teilweise wieder zunichte gemacht.

Eine weitere Vorrichtung ist aus der DE-A1 37 04 182 bekannt. Die den zweiten Verdampfer umfassende Eisspeicher-Baueinheit kann dort während des Fahrbetriebes, d.h. während der Kompressor vom Antriebsmotor des Fahrzeuges betrieben wird, mit Kältemittel versorgt werden, wodurch sich im Eisspeicher befindliches Wasser in Eis umwandelt. Bei Stillstand des Fahrzeuges kann dort über eine zusätzliche Pumpe das Kältemittel in einem kleinen Kreislauf betrieben werden, der den zweiten Verdampfer und den ersten Verdampfer umfaßt. Hierbei wirkt der zweite Verdampfer beim Abschmelzen des Eises im Eisspeicher innerhalb des kleinen Kreislaufes als Verflüssiger, wobei die Kälteenergie wie auch im Fahrbetrieb ausschließlich am ersten Verdampfer mittels einem diesem zugeordneten Gebläse entnehmbar ist. Durch die Notwendigkeit einer zusätzlichen Pumpe entsteht ein zusätzlicher Bauaufwand und der Betrieb der Pumpe belastet bei Stillstand des Fahrzeuges die Fahrzeugbatterie. Darüberhinaus treten bei der Verflüssigung und Verdampfung des Kältemittels sowie über die Leitungsverbindung zwischen zweiten Verdampfer und erstem Verdampfer bei Stillstand des Fahrzeuges zusätzliche Energieverluste auf.

Der vorliegenden Erfindung liegt die Aufgabe zugrunde, eine Vorrichtung zur Kühlung eines Fahrzeuginnenraumes zu schaffen, mittels derer die Luft einen höheren Anteil der vom Eisspeicher aufgenommenen Kälteleistung an den Fahrzeuginnenraum abgibt.

Diese Aufgabe wird durch eine Vorrichtung mit den Merkmalen des Patentanspruchs 1 gelöst. Vorteilhafte Ausgestaltungen der Erfindung sind den Unteransprüchen zu entnehmen.

Durch die Umlenkung der Luft wird diese mehrfach über den Kältespeichern geleitet und nimmt dabei eine höhere Kälteleistung auf. Erfindungsgemäß sind Umlenkbleche vorgesehen die die vorbeistreichende Luft zu einem mehrfachen Passieren des Speicherelementes zwingen. Die Umlenkbleche sind im wesentlichen parallel zur Hauptströmungsrichtung der Luft angeordnet wobei die Luft nacheinander zunächst einen von den Umlenkblechen abgetrennten zentralen Bereich und anschließend zwei Außenbereiche desselben durchströmt. Aufgrund der gekapselten Unterbringung der Baueinheit in einem wasserundurchlässigen Gehäuse kann das bei einer TaupunktUnterschreitung entstehende Kondenswasser in diesem Gehäuse aufgefangen und abgeleitet werden, wodurch auf eine zusätzliche Heizung der Luft zu Anhebung des Taupunkts verzichtet werden kann. Dadurch ist insgesamt eine äußerst verlustarme Energieübertragung gewährleistet. Die Wärmeübertragung kann dabei in einfachster Weise durch Konvektion erfolgen, wobei die unterschiedliche Temperatur und Dichte der anströmenden und abströmenden Luft ausgenutzt wird.

Gemäß einer vorteilhaften Weiterbildung ist vorgesehen, daß die Eintrittsöffnungen und/oder Austrittsöffnungen durch Absperrorgane wahlweise verschließbar oder wenigstens teilweise freigebbar sind. Durch derartige Absperrorgane läßt sich in einfachster Weise die Abgabe von Kälteenergie durch Steuerung der den Aufnahmeraum durchströmenden Luftmenge regulieren. Derartige Absperrorgane können durch einfache Klappen oder Schieber oder lamellenförmig gegeneinander verschiebbare Gitter gebildet werden. Im geschlossenen Zustand der Absperrorgane wird der Aufnahmeraum der Baueinheit nicht durchströmt, so daß auch keine Kälte an den Fahrzeuginnenraum abgeben wird.

Für eine erhöhte Übertragung von Kälteenergie auf die Luft des Fahrzeuginnenraumes ist es weiterhin vorteilhaft, wenn der Aufnahmeraum mittels eines vorzugsweise in seiner Drehzahl regelbaren Gebläses zwangsweise durchströmbar ist.

Die erfindungsgemäße Vorrichtung ist besonders vorteilhaft bei einem Lastkraftwagen verwendbar, wobei der Fahrzeuginnenraum von der Fahrerkabine desselben gebildet wird. In diesem Falle wird die Vorrichtung zur Klimatisierung der Fahrerkabine beim Stillstand des Fahrzeuges verwendet. Hierdurch kann für den Berufskraftfahrer während der vorgeschriebenen Ruhe - oder Schlafpausen auch in wärmeren Ländern ein angenehmes Klima in der Kabine erzeugt werden.

Die Wand, in der die Eisspeicher-Baueinheit angeordnet ist, kann dabei vorzugsweise von der Rück- bzw. Seitenwand der Fahrerkabine gebildet werden. In weiterer Ausgestaltung ist vorgesehen, daß alternativ oder zusätzlich weitere Eisspeicher-Baueinheiten im Dach der Fahrerkabine und/oder in einer horizontalen Trennwand angeordnet sind, welche als Liegen zur Unterteilung von Schlafkojen in der Fahrerkabine dienen. Ebenso ist die Einbeziehung des Fahrerhausbodens als Einbauort denkbar.

Für eine schnellere und bessere Wärmeübertragung vom Kältemittel auf das Speichermedium innerhalb der Eisspeicher-Baueinheiten ist es vorteilhaft, wenn die darin verlaufenden, Kältemittel führenden Rohre mit oberflächenvergrößernden Verbindungsblechen versehen sind.

Nachfolgend ist ein Ausführungsbeispiel der Erfindung anhand der Zeichnung beschrieben. Es zeigt:
- Fig.1: eine schematische, teilweise aufgebrochene Seitenansicht einer Fahrerkabine eines Lastkraftwagens,
- Fig. 2: eine in einem doppelwandigen Aufnahmeraum angeordnete Eisspeicher-Baueinheit mit Umlenkblechen in der Vorderansicht,
- Fig. 3: die Baueinheit gemäß Fig. 2 im Querschnitt und
- Fig. 4: einen Querschnitt durch ein Eisspeicher-Paneel einer Eisspeicher-Baueinheit.

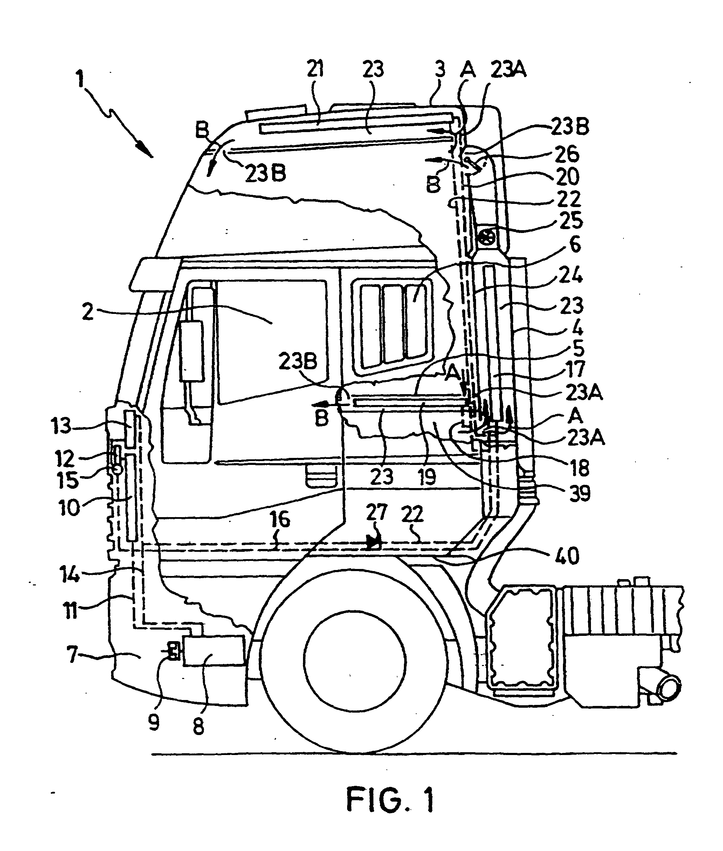

Im Ausführungsbeispiel ist in Fig. 1 ein Teil eines Lastkraftwagens 1 dargestellt, bei dem innerhalb einer Fahrerkabine 2 ein Fahrzeuginnenraum ausgebildet ist. Die Fahrerkabine 2 wird nach oben von einem Dach 3 und nach hinten von einer Rückwand 4 begrenzt. Innerhalb des hinteren Teils der Kabine ist eine horizontale Trennwand 5 vorgesehen, wie sie als Liegefläche zur Aufteilung von Schlafkojen in einem Lastwagen des Fernverkehrs üblich ist, bei dem der hintere Teil der Fahrerkabine 2 als Schlafkabine 6 ausgebildet ist.

In einem Motorraum 7 des Lastkraftwagens 1 ist ein Kompressor 8 angeordnet, der mittels einer Magnetkupplung 9 mit einem nichtdargestellten Antriebsmotor des Fahrzeugs über Keilriemen verbindbar ist. Der Kompressor 8 ist in einen ersten Kältemittelkreislauf eingebunden, wobei er über eine Vorlaufleitung 11 mit einem Verflüssiger 10, einem Sammler 12 und einem erstem Verdampfer 13 mit Expansionsorgan verbunden ist. Das im ersten Kältemittelkreislauf kursierende Kältemittel wird vom ersten Verdampfer 13 über eine Rücklaufleitung 14 zum Kompressor 8 zurückgeleitet.

Zwischen Sammler 12 und erstem Verdampfer 13 ist ein Umschaltventil 15 vorgesehen, bei dem von der Vorlaufleitung 11 eine Zweig-Vorlaufleitung 16 abzweigt, die zu einem zweiten Kältemittelkreislauf gehört. In diesen zweiten Kältemittelkreislauf sind eine oder mehrere Eisspeicher-Baueinheiten integriert, welche jeweils aus einem zweiten Verdampfer mit Expansionsorgan und einem diesen umgebenden Eisspeicher bestehen. Eine erste Eisspeicher-Baueinheit 17 ist im Bereich der Rückwand 4 des Lastkraftwagens 1 angeordnet. Das über die Zweig-Vorlaufleitung 16 zuströmende Kältemittel kann über eine Zweigleitung 18, optional mittels eines weiteren nichtdargestellten Umschaltventiles zu einer zweiten Eisspeicher-Baueinheit 19 und einer-dritten Eisspeicher-Baueinheit 21 geleitet werden. Die zweite Eisspeicher-Baueinheit 19 ist dabei in der horizontalen Trennwand 5 im Bereich der Schlafkabine 6 vorgesehen.

Die dritte Eisspeicher-Baueinheit 21 ist im Bereich des Daches 3 vorgesehen. Sie steht über eine weitere Zweigleitung 18 in Verbindung mit der Zweig-Vorlaufleitung 16 des Kältemittels. Die Eisspeicher-Baueinheiten 17, 19 bzw. 21 sind an eine gemeinsame Rücklaufleitung 22 angeschlossen, welche ihrerseits mit der Rücklaufleitung 14 des Kältemittels zum Kompressor 8 verbunden ist. Ein in der Rücklaufleitung 22 angeordnetes Rückschlagventil 27 unterbindet dabei das Zurückströmen von Kältemittelgas zu den Eisspeicher-Baueinheiten 17, 19 bzw. 21 und das dortige Auskondensieren.

Die Eisspeicher-Baueinheit 17 ist in einem Aufnahmeraum 23 angeordnet, welcher von der Rückwand 4 der Fahrerkabine 2 und einer davor mit Abstand angeordeten Zwischenwand 24 vorgesehen ist. Ebenso sind die optional oder alternativ vorgesehene Eisspeicher-Baueinheit 21 im Dachbereich und die weitere optional oder alternativ vorgesehene Eisspeicher-Baueinheit 19 im Bereich der horizontalen Trennwand 5 jeweils in einem Aufnahmeraum 23 vorgesehen, der durch eine Doppelwandigkeit hergestellt wird.

Die Aufnahmeräume 23 sind jeweils durch einen Eintritt 23 A und einen Austritt 23 B mit der Fahrerkabine 2 verbunden, sodaß eine Luftströmung durch den doppelwandigen Aufnahmeraum 23 stattfinden kann. Diese Luftdurchströmung, die entweder durch Konvektion aufgrund der temperaturbedingten Dichteunterschiede der Luft in der Fahrerkabine 2 stattfindet oder aber durch ein optional vorgesehenes Gebläse 25 zwangsweise stattfindet, kann mittels eines Absperrorgans 26 geregelt werden. Das Absperrorgan 26 ist beispielsweise als schwenkbare Klappe ausgebildet, welche beispielhaft am oberen Ende des Aufnahmeraumes 23 für die Eisspeicher-Baueinheit 17 dargestellt ist. Die Klappe kann manuell oder motorisch betätigt werden und durch entsprechende andere Absperrorgane, wie verschiebbare Gitter oder Schieber ersetzt werden. Auch wenn dies in der Fig. 1 nicht dargestellt ist, versteht sich, daß auch die anderen Aufnahmeräume 23 für die Eisspeicher-Baueinheiten 19 bzw. 21 jeweils mit einem entsprechenden Absperrorgan und/oder einem Gebläse ausgestattet sein können. Durch den Eintritt 23 A strömt Luft entsprechend dem Pfeil A in den Aufnahmeraum 23, wird an der betreffenden Eisspeicher-Baueinheit 17, 19 bzw. 21 vorbeigeleitet und dabei abgekühlt und verläßt durch die Austrittöffnungen 23 B entsprechend dem Pfeil B als abgekühlte Luft die Aufnahmeräume 23 in Richtung zur Fahrerkabine 2.

Die Anlage ist vorzugsweise so ausgelegt, daß der Kompressor 8 genügend Leistung aufweist, um auch bei großem Kältebedarf während des Betriebes der Brennkraftmaschine nicht nur genügend Kälteleistung für den ersten Verdampfer 13 zur normalen Abkühlung der Fahrerkabine 2 während der Fahrt bereitzustellen, sondern zusätzlich einen oder mehrere der Eisspeicher-Baueinheiten 17, 19, 21 durch Umwandlung von Wasser in Eis aufzuladen, sodaß bei einer anschließenden Pause durch eine einfache Durchströmung der betreffenden Aufnahrneräume 23 mit Luft eine Abkühlung der Fahrerkabine 2 erreicht werden kann. Hierdurch ist gewährleistet, daß der Fahrer während seiner Ruhe - bzw. Schlafpausen auch in wärmeren Ländern ein angenehmes Klima in der Fahrerkabine 2 vorfindet.

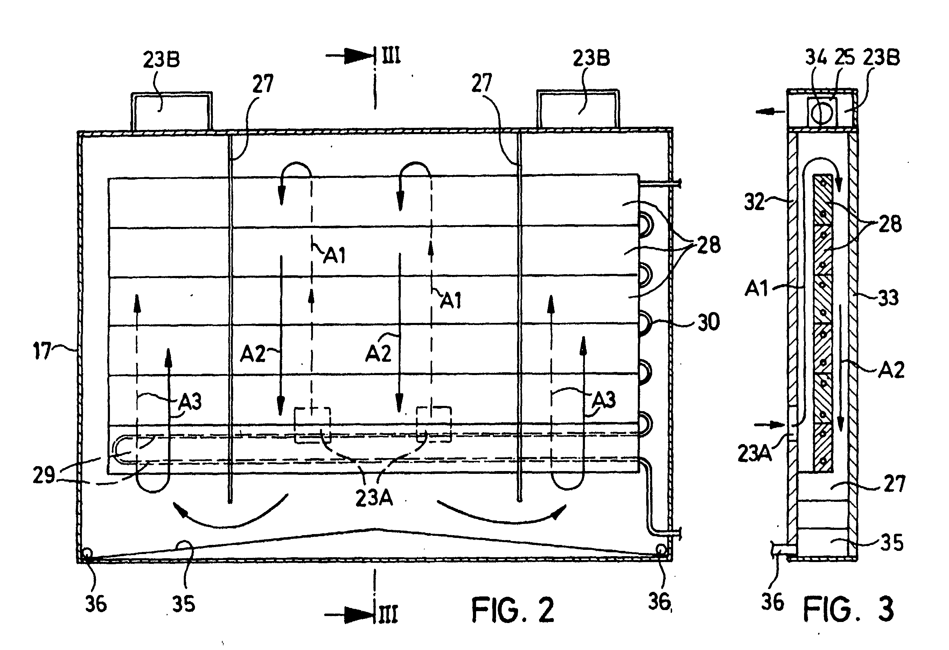

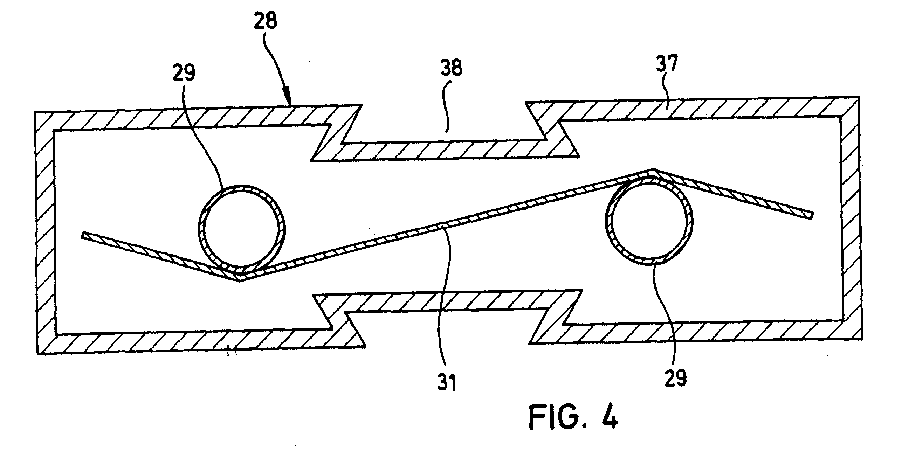

Wie in den Fig. 2 und 3 am Beispiel der Eisspeicher-Baueinheit 17 dargestellt, besteht diese aus mehreren Eisspeicher-Elementen 28, von denen eines im Querschnitt in der Fig. 4 dargestellt ist. Die Eisspeicher-Elemente 28 sind über schwalbenschwanzförmige Nuten 38 an ihrer Außenwand 37 mit entsprechend geformten Halterungen verbunden. Wie am Beispiel des in der Fig. 2 untersten der sechs dargestellten Eisspeicher-Elemente gezeigt, verläuft in jedem Eisspeicher-Element ein haarnadelförmig gekrümmtes Rohr 29, welches vom Kältemittel durchströmt wird. Die einzelnen Rohre 29 sind zu einer Seite durch bogenförmige Rohrverbinder 30 miteinander verbunden. In ihrer Breite, d.h. quer zur Fahrzeuglängsachse, ist die Eisspeicher-Baueinheit 17 durch insgesamt vier vertikal angeordnete Umlenkbleche 27 strömungsmäßig so für die zu kühlende Luft unterteilt, daß diese insgesamt dreimal an der Eisspeicher-Baueinheit 17 vorbeistreicht. Nach Eintritt der Luft durch die unten liegenden Eintrittsöffnungen 23 A steigt diese entsprechend den mit A1 bezeichneten Pfeilen in dem Teil des Aufnahmeraumes 23 nach oben, der zwischen den Eisspeicher-Elementen 28 und einer mit einer Isolierschicht versehenen Vorderwand 32 der Baueinheit 17 liegt. Der von den Umlenkblechen 27 begrenzte mittlere Teil der Eisspeicher-Baueinheit 17 ist nach oben durch eine obere Wand 34 geschlossen, sodaß die Luft im oberen Teil umgelenkt und entsprechend den mit A2 bezeichneten Pfeilen zwischen den Eisspeicher-Elementen 28 und einer ebenfalls mit einer Isolierschicht versehenen Rückwand 33 nach unten geleitet wird. Im unteren vorderen Bereich der Baueinheit 17 sind die Übertritte zu den Außenbereichen der Umlenkbleche 27 liegenden Bereiche frei, sodaß die Luft entsprechend der Pfeile A3 dort zu beiden Seiten der Eisspeicher-Elemente 28 nach oben aufsteigen kann, wo sie schließlich durch die Austrittsöffnung 23B als gekühlte Luft in die Fahrerkabine 2 eintritt und unter Kälteabgabe langsam zu Boden sinkt. Wie bereits weiter oben angedeutet, kann die Luftzirkulation in den Eisspeicher-Baueinheiten 17, 19, 21 dabei durch ein Absperrorgan 26 gesteuert und optional durch ein Gebläse 25 erzwungen werden. Die Eisspeicher-Baueinheiten weisen vorzugsweise im unteren Teil eine Kondensatwanne 35 auf, in welcher nach außen hin geneigte Leitbleche im Bodenbereich vorgesehen sind, sodaß durch die Abkühlung der Luft kondensierende Luftfeuchtigkeit über zwei außenliegende Kondensatableitungen 36 mit entsprechenden Schläuchen ins Freie abgeführt werden kann.

Wie in Fig. 4 dargestellt, sind im Inneren eines Eisspeicher-Elementes 28 S-förmig abgewinkelte Verbindungsbleche 31 vorgesehen, mittels derer die beiden eine Haarnadel bildenden Rohre 29 derart verbunden sind, daß eine gute Wärmeleitung im gesamten Eisspeicher-Elementl 28 stattfindet und somit eine gleichmäßige Eisbildung bzw. ein gleichmäßiges Abschmelzen des Eises erfolgen kann. Hierzu ist annähernd das gesamte durch die Außenwand 37 begrenzte Gehäuse der Eisspeicher-Elemente 28 mit einem Speichermedium auf Wasserbasis gefüllt, welches durch das die Rohre 29 durchströmende Kältemittel in den festen Aggregatszustand versetzt wird und welches durch die an der Außenwand 37 bei Standklimatisierung vorbeistreichende Luft wieder in den flüssigen Zustand versetzt wird.

Durch die erfindungsgemäße Vorrichtung ist eine komfortable Klimatisierung eines Fahrzeuginnenraumes im Stand möglich. Die Steuerung des Ventils 15 für die Beladung der Eisspeicher-Baueinheiten 17, 19, 21 erfolgt vorzugsweise automatisch mittels einer Steuereinheit, abhängig vom Ausnutzungsgrad des Verdichters durch den Fahrzeugverdampfer 13. Wenn die Magnetkupplung 9 aufgrund genügend hoher Kälteleistung am Verdampfer 13 ein Signal zum Abkuppeln erhält, wird das Umschaltventil 15 betätigt und der Kompressor 8 läuft zum Beladen der Eisspeicherbaueinheit(en) 17, 19, 21 weiter.

Sobald erneuter Kältebedarf am Verdampfer 13 signalisiert wird, erfolgt eine erneute Umschaltung des Ventils 15, sodaß vorrangig der Innenraum (Fahrerkabine 2) gekühlt wird.

Neben den besachriebenen Einbauorten bieten sich auch die Bodenwand 40 sowie die Seitenwände 39 der Fahrerkabine 2 zur Unterbringung von Eisspeicher-Baueinheiten an.

Das Entladen der Eisspeicher-Baueinheiten kann durch Steuerung der Gebläse 25 und/oder der Absperrorgane 26 in Abhängigkeit von der mittels eines Sensors gemessenen Innenraumtemperatur geregelt erfolgen.

### Bezugszeichenliste

- 1: Lastkraftwagen
- 2: Fahrerkabine
- 3: Dach
- 4: Rückwand
- 5: (horizontale) Trennwand
- 6: Schlafkabine
- 7: Motorraum
- 8: Kompressor
- 9: Magnetkupplung
- 10: Verflüssiger
- 11: Vorlaufleitung
- 12: Sammler
- 13: Verdampfer
- 14: Rücklaufleitung
- 15: Umschaltventil
- 16: Zweig-Vorlaufleitung
- 17: Eisspeicher-Baueinheit
- 18: Zweigleitung
- 19: Eisspeicher-Baueinheit
- 20: Zweigleitung
- 21: Eisspeicher-Baueinheit
- 22: Rücklaufleitung
- 23: Aufnahmeraum
- 23A: Eintritt (zu 23)
- 23B: Austritt (aus 23)
- 24: Zwischenwand
- 25: Gebläse
- 26: Absperrorgan
- 27: Umlenkblech
- 28: Eisspeicher-Element
- 29: Rohr
- 30: Rohrverbinder
- 31: Verbindungsblech
- 32: Vorderwand (von 23)
- 33: Rückwand (von 23)
- 34: obere Wand (von 23)
- 35: Kondensatwanne
- 36: Kondensatableitung
- 37: Außenwand (von 28)
- 38: Schwalbenschwanz-Nut
- 39: Seitenwand
- 40: Bodenwand

- A: Ansaugluft
- B: klimatisierte Luft

## Patentansprüche

1. Vorrichtung zur Kühlung eines Fahrzeuginnenraumes mit einem ersten Kältemittelkreislauf, der einen Kompressor, einen Verflüssiger und wenigstens einen ersten Verdampfer umfaßt und mit einem zweiten Kältemittelkreislauf, der wenigstens einen weiteren Verdampfer umfaßt, der mit einem Eisspeicher zu einer Baueinheit verbunden ist und der mittels wenigstens eines Ventils parallel zum ersten Verdampfer schaltbar ist, wobei die Baueinheit (17,19, 21) aus Eisspeicher und weiterem Verdampfer als flächiges Element in einer einen Aufnahmeraum (23) bildenden, doppelwandig ausgebildeten Wand (4, 3, 5) des Fahrzeuginnenraumes angeordnet und über Eintrittsöffnungen (23A) und Austrittsöffnungen (23B) in direkte wärmeübertragende Verbindung mit der Luft des Fahrzeuginnenraums bringbar ist und wobei im Aufnahmeraum (23) wenigstens eine Umlenkvorrichtung zur Leitung des Luftstromes vorgesehen ist, **dadurch gekennzeichnet, daß** die Umlenkvorrichtung von Umlenkblechen (27) gebildet wird, die im wesentlichen parallel zur Hauptstömungsrichtung der Luft angeordnet sind, welche die Baueinheit (17, 19, 21) in einen zentralen Bereich und zwei Außenbereiche unterteilen, die zumindest teilweise nacheinander durchstömt werden und durch die die an der Baueinheit (17, 19,21) vorbeistreichende Luft zu einem mehrfachen Passieren der Baueinheit (17,19,21) gezwungen wird.

2. Vorrichtung nach Anspruch 1, **dadurch gekennzeichnet daß** Eintrittsöffnungen (23A) und/oder die Austrittsöffnungen (23B) durch Absperrorgane (26) wahlweise verschließbar oder wenigstens teilweise freigebbar sind.

3. Vorrichtung nach Anspruch 2, **dadurch gekennzeichnet daß** der Aufnahmeraum (23) mittels eines Gebläses (25) zwangsweise durchströmbar ist.

4. Vorrichtung nach einem der vorhergehenden Ansprüche, wobei der Fahrzeuginnenraum von einer Fahrerkabine (2) eines Lastkraftwagens (1) gebildet wird.

5. Vorrichtung nach Anspruch 4, wobei die Wand von der Rückwand (4) und/oder einer Seitenwand (39) der Fahrerkabine (2) gebildet wird.

6. Vorrichtung nach Anspruch 4, wobei die Wand vom Dach (3) der Fahrerkabine (2) gebildet wird.

7. Vorrichtung nach Anspruch 4, wobei die Wand von einer horizontalen Trennwand (5), die zur Abtrennung von Schlafkojen in der Fahrerkabine dient, oder der Bodenwand (40), gebildet wird.

8. Vorrichtung nach einem der vorhergehenden Ansprüche, **dadurch gekennzeichnet daß** in der Baueinheit (17, 19, 21) verlaufende, kältemittelführende Rohre (29) mit oberflächenvergrößernden Verbindungsblechen (31) versehen sind.

## Claims

1. Apparatus for cooling a vehicle interior, having a first refrigerant circuit which comprises a compressor, a condenser and at least a first evaporator, and having a second refrigerant circuit which comprises at least one further evaporator, which is connected to an ice reservoir to form a structural unit and which can be connected in parallel with the first evaporator by means of at least one valve, the structural unit (17, 19, 21) comprising the ice reservoir and further evaporator being arranged as a flat element in a wall (4, 3, 5) of the vehicle interior, the said wall having double walls and forming a housing space (23), and being capable of being brought into a direct heat-transferring connection with the air of the vehicle interior via inlet openings (23A) and outlet openings (23B), and at least one deflection apparatus for guiding the air stream being provided in the housing space (23), **characterized in that** the deflection apparatus is formed by baffles (27) which are arranged substantially parallel with the main flow direction of the air and which subdivide the structural unit (17, 19, 21) into a central region and two outer regions, through which there is at least partially successive flow and by means of which the air sweeping past the structural unit (17, 19, 21) is forced to pass the structural unit (17, 19, 21) repeatedly.

2. Apparatus according to Claim 1, **characterized in that** inlet openings (23A) and/or the outlet openings (23B) can be closed or at least partly opened as desired by means of shut-off elements (26).

3. Apparatus according to Claim 2, **characterized in that** the housing space (23) can have flow forced through it by means of a fan (25).

4. Apparatus according to one of the preceding claims, the vehicle interior being formed by a driver's cab (2) of a heavy goods vehicle (1).

5. Apparatus according to Claim 4, the wall being formed by the rear wall (4) and/or a side wall (39) of the driver's cab (2).

6. Apparatus according to Claim 4, the wall being formed by the roof (3) of the driver's cab (2).

7. Apparatus according to Claim 4, the wall being formed by a horizontal bulkhead (5), which is used to divide off sleeping berths in the driver's cab, or the bottom wall (40).

8. Apparatus according to one of the preceding claims, **characterized in that** refrigerant-carrying pipes (29) running in the structural unit (17, 19, 21) are provided with surface-enlarging connecting plates (31).

## Revendications

1. Dispositif pour le refroidissement de l'habitable d'un véhicule, équipé d'un premier circuit d'agent frigorigène comprenant un compresseur, un condenseur et au moins un premier évaporateur, et d'un second circuit d'agent frigorigène comprenant au moins un évaporateur supplémentaire relié à un accumulateur de glace pour former un ensemble structurel unitaire, et pouvant être branché en parallèle avec le premier évaporateur à l'aide d'au moins une vanne, l'ensemble structurel unitaire (17, 19, 21) constitué de l'accumulateur de glace et de l'évaporateur supplémentaire étant disposé, sous la forme d'un élément aplati, dans une paroi (4, 3, 5) à réalisation double de l'habitacle du véhicule, qui matérialise un logement (23), et pouvant être mis en liaison directe de transfert thermique avec l'air de l'habitacle du véhicule, par l'intermédiaire d'orifices d'entrée (23a) et d'orifices de sortie (23b), et au moins un dispositif déflecteur étant prévu dans le logement (23), pour guider le courant d'air, **caractérisé par le fait que** le dispositif déflecteur est formé de chicanes (27) qui sont agencées pour l'essentiel parallèlement à la direction d'écoulement principale de l'air et subdivisent l'ensemble structurel unitaire (17, 19, 21) en une région centrale et en deux régions extérieures parcourues par un flux au moins partiellement en succession, et par l'intermédiaire desquelles l'air, circulant en regard de l'ensemble structurel unitaire (17, 19, 21), est contraint à franchir plusieurs fois ledit ensemble structurel unitaire (17, 19, 21).

2. Dispositif selon la revendication 1, **caractérisé par le fait que** des orifices d'entrée (23a) et/ou les orifices de sortie (23b) peuvent être sélectivement obturés ou au moins partiellement dégagés, par l'intermédiaire d'organes d'isolement (26).

3. Dispositif selon la revendication 2, **caractérisé par le fait que** le logement (23) est parcouru par une circulation forcée, au moyen d'une soufflerie (25).

4. Dispositif selon l'une des revendications précédentes, dans lequel l'habitacle du véhicule est matérialisé par une cabine de conduite (2) d'un poids lourd (1).

5. Dispositif selon la revendication 4, dans lequel la paroi est matérialisée par la paroi postérieure (4) et/ou par une paroi latérale (39) de la cabine de conduite (2).

6. Dispositif selon la revendication 4, dans lequel la paroi est matérialisée par le toit (3) de la cabine de conduite (2).

7. Dispositif selon la revendication 4, dans lequel la paroi est matérialisée par une cloison séparatrice horizontale (5) servant à la séparation de compartiments de couchage dans la cabine de conduite, ou par la paroi de plancher (40).

8. Dispositif selon l'une des revendications précédentes, **caractérisé par le fait que** des tubulures (29) guidant l'agent frigorigène, s'étendant dans l'ensemble structurel unitaire (17, 19, 21 ), sont pourvues de tôles de solidarisation (31) à effet d'accroissement de surface.
